# EUROPEAN PATENT APPLICATION

(11) **EP 1 679 564 A1**
(43) Date of publication of application: **12.07.2006**
(21) Application number: 05255649.5
(22) Date of filing: 14.09.2005
(51) Int. Cl.: G05B 19/05

(54) **Programmable controller**

(30) Priority: 07.01.2005 JP 2005002004
(71) Applicant: Hitachi Industrial Equipment Systems Co. Ltd., Chiyoda-ku Tokyo (JP)
(72) Inventor: Yamamoto, Kei, Hitachi Ind. Equipm. Syst. Co.,Ltd., Kitakanbara-gun, Nigata (JP)
(74) Representative: Calderbank, Thomas Roger

(57) **Abstract**

Although a program created by a user for a conventional programmable controller has a security function using a password, there is a risk that the program is stolen due to leakage of the password. The programmable controller of the invention has a function of changing an arbitrary program created by a user, to a function, a function of transferring the user program in the function to a system memory (4) of the programmable controller as a portion of a system program, a function of making the user program execute the user program in the function as the portion of the system program, a function of increasing a capacity of a user program area (5) and efficiently using the user program area, and a security function of preventing information leakage by disabling perusal of the content of the user program in the function.

## Description

The present invention relates to a programmable controller, and more particularly to a security function of changing any user program created by the user to a function to disable perusal of the content of the user program and prevent leakage of information.

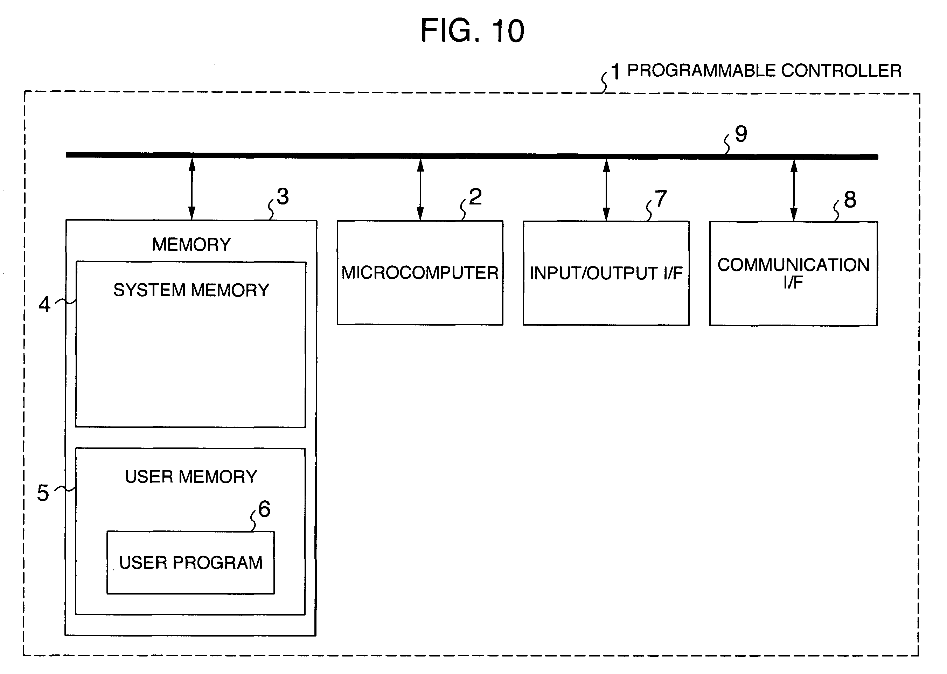

A user program is property of the user who created it through many processes. Since a programmable controller does not operate when there is no user program, a user program is always stored in the program controller. Fig. 10 is a block diagram of a conventional programmable controller. As shown in Fig. 10, a programmable controller 1 is constituted of: a microcomputer 2 which executes an arithmetic and logical operation; a memory 3 for storing sequence programs and data, the memory 3 including a system memory 4 storing a system program and a memory 5 storing a user program 6 and functioning also as a user memory; an input/output interface (I/F) 7 for inputting/outputting a signal from/to an external; and a communication I/F 8 for data transfer to/from a control apparatus and the like. These devices are connected to a bus line 9.

Since general users do not install a countermeasure for inhibiting reference to user programs in this system, the programs as user property can be acquired easily in some cases.

In order to inhibit reference to user programs, a security function using a password is generally adopted. However, the security function using a password is associated with a security hole that if a password is leaked, the security function can be broken easily. One reason for this is that a user sets the password easy to be memorized by the user so that the password can be estimated easily by third parties. Even if a password difficult to be estimated by third parties is set, the password is also difficult to be memorized by the user so that there is a risk of forgetting it or the password written in a memo is easy to be leaked to third parties.

JP-A-10-133719 discloses a programmable controller capable of not using a user program memory.

An aim of this invention is to provide a security function of preventing leakage of a user program in a programmable controller which has a security function using a password and a security hole that if the password is stolen, the programmable controller becomes unfortified.

In order to achieve the above-described aim of the present invention, a portion or the whole of a user program is changed to a function defined by the user, and the function is stored in a system memory as a portion of a system program. Users are permitted to write only the user definition function in the system memory as a portion of the system program, and any users are rejected to read the user definition function stored as the portion of the system program. Since any users cannot read the system program, it is possible to inhibit perusal of the user program which constitutes the portion of the system program. It is therefore possible to prevent leakage of the user program which is changed to a function defined by the user and stored as the portion of the system program.

Since data can be written in or read from a user program area like a conventional system, maintenance can be provided to some degree.

In addition to the above-described merits, the present invention has the following merits:
1. A user program can be written simply.
2. A capacity of the user program area can be increased or used efficiently.

Other aims, features and advantages of the invention will become apparent from the following description of the embodiments of the invention taken in conjunction with the accompanying drawings.

### IN THE DRAWINGS:

Fig. 1 is a block diagram of a programmable controller according to the present invention.
Fig. 2 is a diagram showing the structure of a memory area according to the present invention.
Fig. 3 is a diagram showing the structure of a system memory.
Fig. 4 is a diagram showing the details of a user definition function table.
Fig. 5 is a diagram showing the details of the structure of the system memory.
Fig. 6 is a diagram illustrating a method of transferring a user definition function to the system memory.
Fig. 7 is a diagram illustrating a process of adding a Return statement to the end of a user definition function when the user definition function is transferred.
Fig. 8 is a flow chart illustrating a process of executing a user definition function stored in the system program.
Fig. 9 is a diagram illustrating a process of returning to a user program after the user definition function is executed.
Fig. 10 is a block diagram of a conventional programmable controller.

Preferred embodiments of the invention will be described in the following.

An embodiment of a programmable controller according to the present invention will be described with reference to the accompanying drawings.

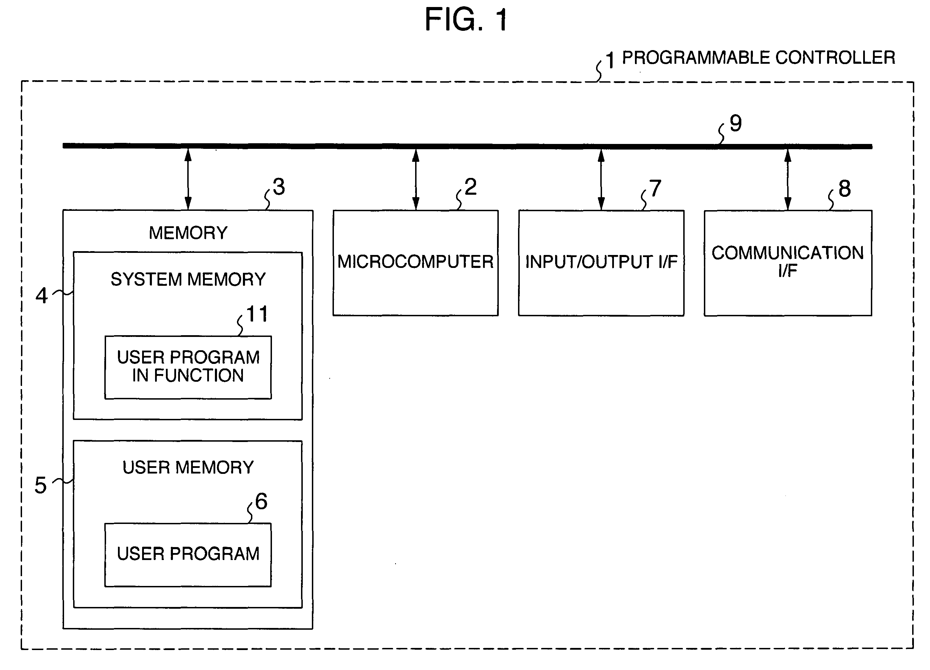

Fig. 1 is a block diagram of the programmable controller of the present invention. As shown in Fig. 1, the programmable controller 1 has: a microcomputer 2 which executes an arithmetic and logical operation; and a memory 3 for storing sequence programs and data, the memory 3 including a system memory 4 storing a system program and a user program in the form of a function and a memory 5 storing a user program 6 and functioning also as a user memory. A user program changed to a function will be later detailed. The whole of a user program is not necessarily changed to a function and stored in the system memory. The programmable controller 1 has also an input/output interface (I/F) 7 for inputting/outputting a signal from/to an external; and a communication I/F 8 for data transfer to/from a control apparatus and the like. These devices of the programmable controller are connected to a bus line 9.

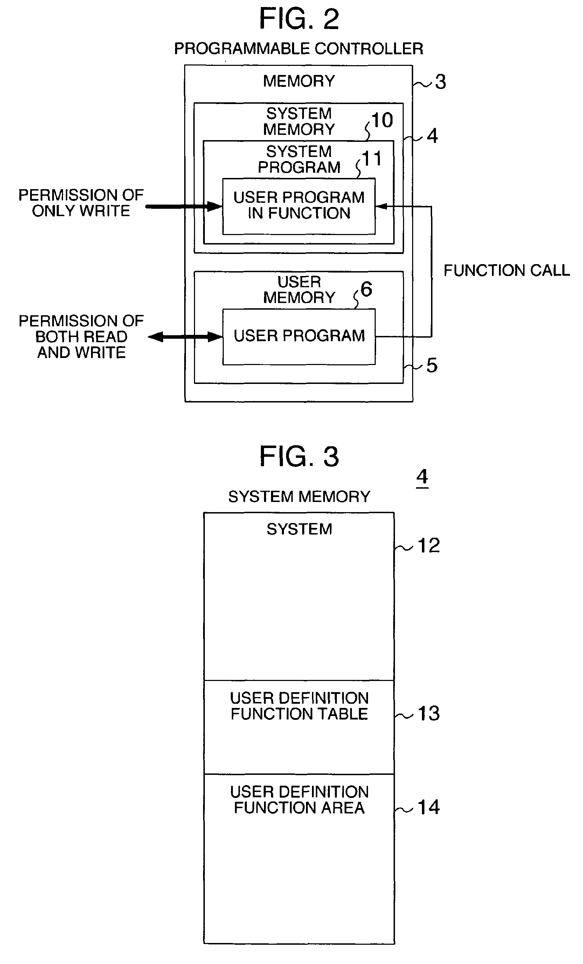

Fig. 2 shows the structure of the memory 3 of the programmable controller. The memory 3 of the programmable controller has both the system memory 4 storing the system program and the user memory 5 storing a user program 6 created by the user and the like. In the present invention, a portion or the whole of the user program 6 is changed to a function defined by the user and having a name of FUN xx (n), and the function is stored in the system memory 4 as a portion of the system program 10. In this case, a read process from the system program 10 including the user definition function is inhibited to disable reference to the system program area. Therefore, any users including the user defined the function cannot peruse the user definition function.

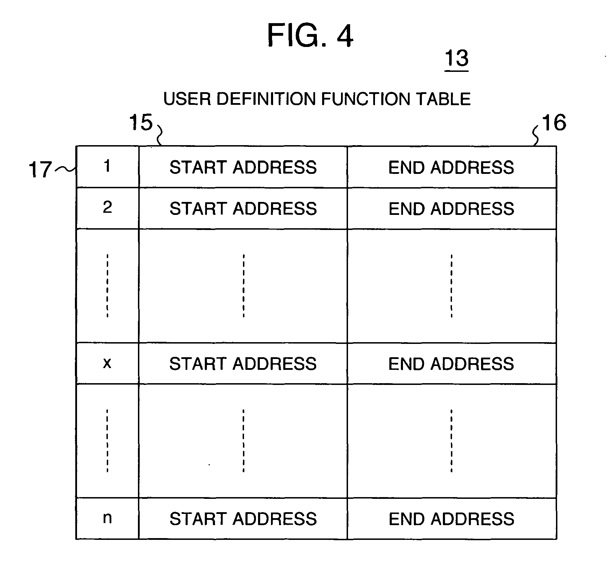

Next, description will be made on a process of transferring a user definition function to the system memory. Fig. 3 shows the structure of the system memory 4. As shown in Fig. 3, the system memory 4 is divided into a system area 12 in which information on the system is stored and an area in which information on a user definition function is stored. The area in which information on a user definition function is stored, is divided into a user definition function table 13 in which information on user definition functions is stored and a user definition function area 14 in which user definition functions are stored. Fig. 4 shows the details of the user definition function table 13. Referring to Fig. 4, the user definition function table 13 has an area for storing an identification number 17 for identifying a user definition function and areas for storing a start address 15 and an end address 16 of each user definition function stored in the user definition function area. The identification number 17 for identifying a user definition function is used for identifying each user definition function changed from a plurality of user programs.

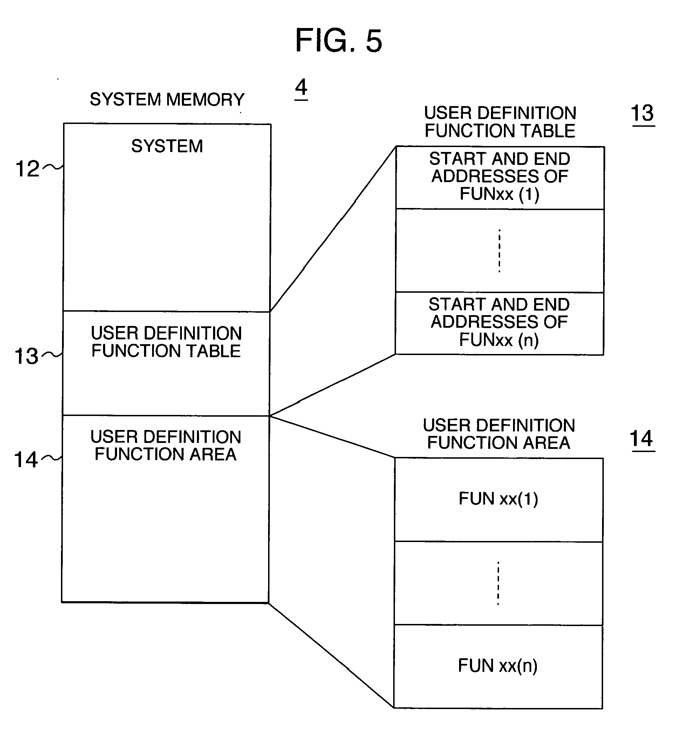

Fig. 5 shows the details of the user definition function table 13 and user definition function area 14. Information shown in Fig. 4 is stored in the user definition function table 13. Namely, as shown in Fig. 5, the start and end addresses of FUNxx (1) are stored, the start and end addresses of FUNxx (2) are stored, the start and end addresses of FUNxx (3) are stored, and etc.

User definition functions are stored in the user definition function area 14. Namely, FUNxx (1), FUNxx (2), FUNxx (3) and etc. are sequentially stored. The start addresses of the user definition functions having the identification number "2" and subsequent numbers are determined on the basis of the end addresses of the user definition functions having the identification numbers preceded by one identification number.

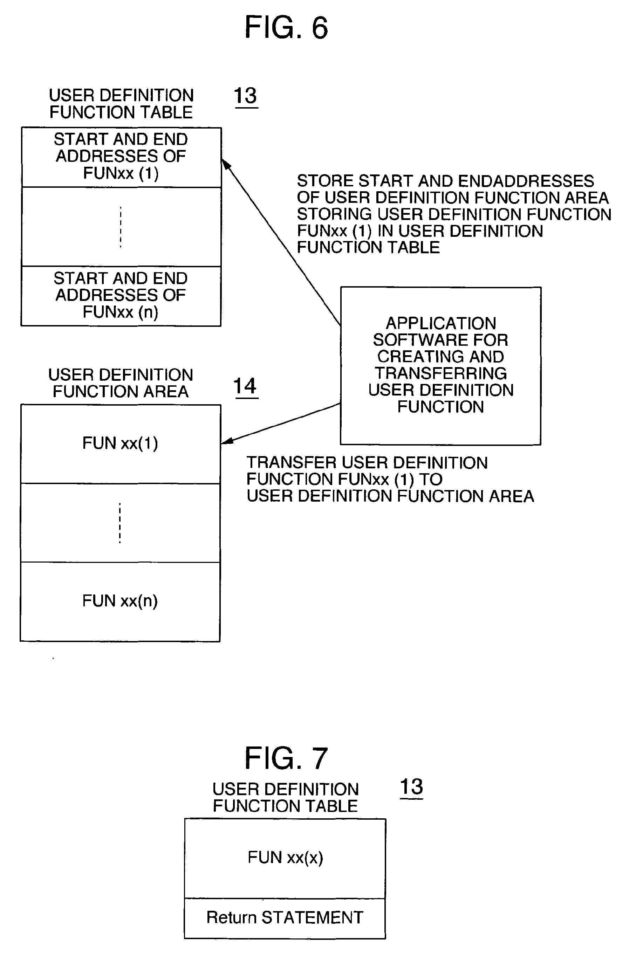

Fig. 6 illustrates a method of transferring a user definition function. A user definition function is created by using a dedicated tool having a function of creating and transferring a user definition function, and transferred to the system memory. The dedicated tool is application software which can be executed by a personal computer (PC) or the like, and operates like an already existing ladder programming tool for programming a ladder program. Different points from the ladder programming tool reside in that the program is stored not in the user memory but in the system memory and that the program cannot be read. By using this application software, a user program is changed to a user definition function and the user program in the form of a function is transferred to the programmable controller. Although this application software can write the user definition function in the system program, it cannot read the user definition function from the system program. When the created user definition function is to be transferred, the user definition function is stored in the user definition function area and the start and end addresses of this storage area are stored in the user definition function table. This application software adds a "Return statement" to the end of the user definition function when the user definition function is stored in the user definition function area. Fig. 7 illustrates a process of the application software for adding the "Return statement" to the end of the user definition function. By adding the "Return statement" to the end of the user definition function, the process can be returned to the user program after the user definition function is executed.

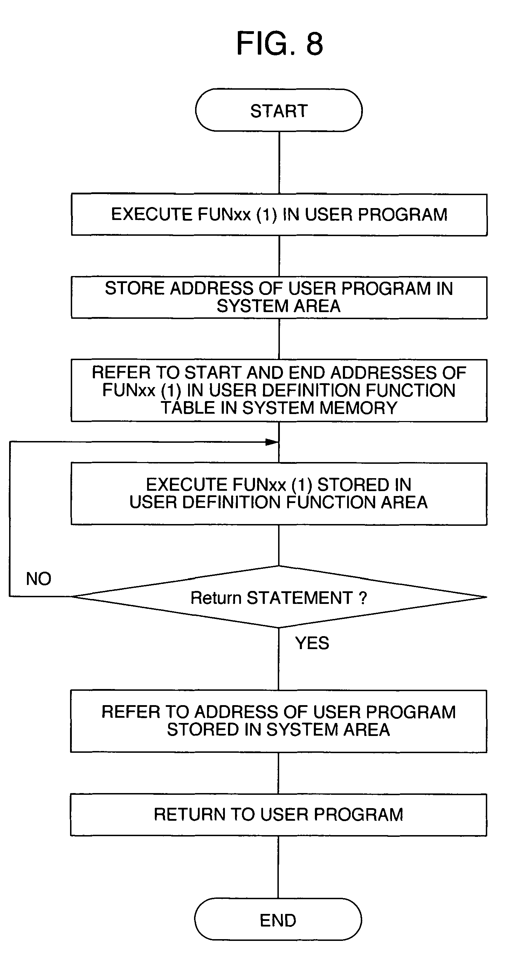

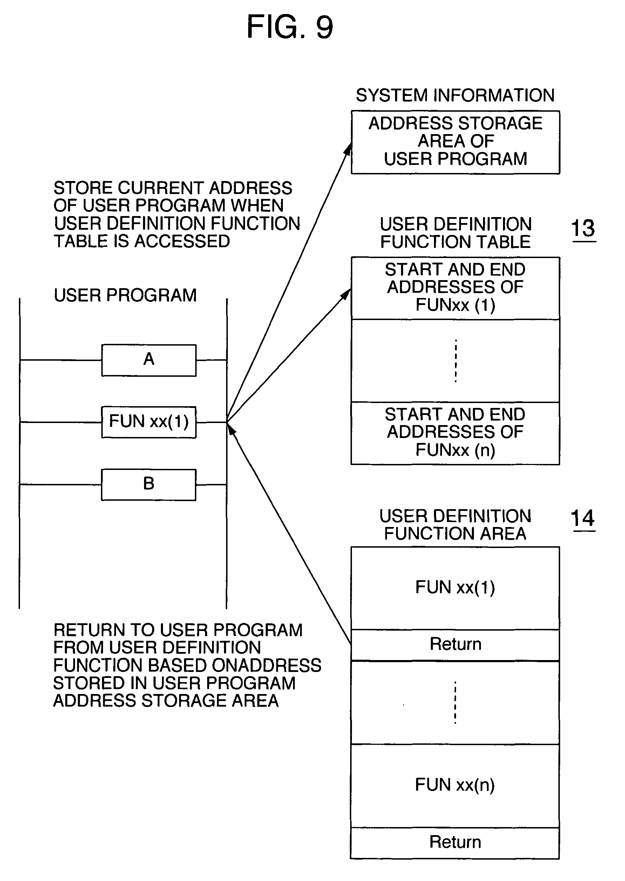

Description will be made on a method of reading a user definition function stored in the system memory as a portion of the system program. The user definition function can be read only when the user program issues a function call. Fig. 8 is a flow chart illustrating a process of executing a user program and a user definition function, and Fig. 9 explains the process shown in Fig. 8. When a user definition function is to be executed, the user definition function table storing information on the user definition function is accessed by referring to the identification number of the user definition function. When the user definition function table is accessed, the current address of the user program is stored in the system area. The start and end addresses of the user definition function are read from the user definition function table. In accordance with the read start and end addresses, the user definition function is read from the user definition function area and executed. When the user definition function table storing information on the user definition function is accessed in accordance with offset information on the user definition function, the current address of the user program is stored in a "user program address storage area" storing the system information. When the process is to be returned to the user program after the user definition function is executed, the process returns to the user program in accordance with the address of the user program stored in the "user program address storage area".

Since any users can be write data in or read data from a user memory storing a user program like a conventional system, maintenance can be provided to some degree. Since a portion or the whole of a user program is changed to a function defined by the user and the function is stored in the system memory as a portion of the system program, the user program stored in the user memory can be written simply. Readability of the user program is therefore improved and maintenance is also improved. A capacity of the user memory can therefore be used efficiently.

The advantageous effects of the present invention are as follows. (1) A user program stored in the system memory as a portion of the system program cannot be perused by any users, so that sufficient security can be retained. (2) Since data can be read from and written in a user program area like a conventional system, maintenance can be provided to some degree. (3) Since a user program is changed to a function, the user program can be written simply and readability of the user program is improved. (4) A portion or the whole of a user program, which has been stored conventionally in the user program, is stored in the system memory as a portion of the system program. A capacity of the user program capable of being stored can therefore be increased or used efficiently.

It should be further understood by those skilled in the art that although the foregoing description has been made on embodiments of the invention, the invention is not limited thereto and various changes and modifications may be made without departing from the spirit of the invention and the scope of the appended claims, as interpreted by the description and drawings.

## Claims

1. A programmable controller comprising:
a user memory (5) for storing a user program created by a user and other data;
a system memory (4) for storing a system program; and
means for changing a portion or a whole of an arbitrary user program created by the user, to a function.

2. A programmable controller comprising:
a user memory (5) for storing a user program created by a user and other data;
a system memory (4) for storing a system program;
means for changing a portion or a whole of an arbitrary user program created by the user, to a function;
means for transferring the user program in the function to said system memory as a portion of the system program; and
means for making the user program stored in said user memory execute the user program in the function as the portion of the system program.

3. The programmable controller according to claim 2, wherein:
when the user program in the function is stored in said system memory, said system memory is divided into a user definition function table and a user definition function area;
said user definition function table stores start and end addresses of a user definition function; and
said user definition function area stores the user definition function.
